# EUROPÄISCHE PATENTSCHRIFT

(11) **EP 2 520 867 B1**
(45) Veröffentlichungstag und Bekanntmachung des Hinweises auf die Patenterteilung: **21.07.2021**
(21) Anmeldenummer: 12166047.6
(22) Anmeldetag: 27.04.2012
(51) Int. Cl.: F24D 3/16, F24F 5/00

(54) **System aus Deckenstrahlplatten und Gebäude hiermit**
System of radiant ceiling panels and building with same
Système à base de panneaux rayonnants pour plafond et bâtiment en étant équipé

(30) Priorität: 02.05.2011 DE 102011100211
(43) Veröffentlichungstag der Anmeldung: 07.11.2012
(73) Patentinhaber: Frenger Systemen BV Heiz- und Kühltechnik GmbH, 64823 Gross-Umstadt (DE)
(72) Erfinder: Menge, Klaus, 64823 Groß-Umstadt (DE)
(74) Vertreter: Keil & Schaafhausen Patentanwälte PartGmbB

(56) Entgegenhaltungen:
- BE-A- 495 557
- DD-A1- 247 960
- DE-C- 963 645
- None

## Beschreibung

Die Erfindung betrifft ein System aus Deckenstrahlplatten zum Temperieren eines Raumes bzw. einer Anforderungszone innerhalb eines Raumes. Weiter Betrifft die Erfindung ein Gebäude mit einem solchen System. Die Deckenstrahlplatten weisen mehrere von einem Wärmeübertragungsmedium durchströmte Rohre, die ein Rohrregister bilden können, sowie wenigstens eine mit dem Rohrregister in wärmeleitendem Kontakt stehende Abstrahlfläche aufweist, die in einer Einbaulage in Richtung des zu temperierenden Raumes bzw. dessen Anforderungszone weist.

Ein derartiges System aus Deckenstrahlplatten kann zum Kühlen oder Heizen insbesondere von Räumen und Hallen aber auch von offenen Bereichen eingesetzt werden.

Ein Gebäude mit Deckenstrahlplatten gemäß dem Oberbegriff des Anspruchs 1 ist aus der Patentschrift BE 495 557 A bekannt. Bei derartigen Systemen, die bspw. aus der DE 100 24 507 B4 bekannt sind, werden zumeist mehrere gleichartig aufgebaute Deckenstrahlplatten im Wesentlichen horizontal ausgerichtet oberhalb der zu temperierenden Anforderungszone angebracht. Die Anforderungszone ist ein räumlich begrenzter Bereich, zu dessen Temperierung das System aus Deckenstrahlplatten eingesetzt wird, d.h. bspw. der Bereich eines Raumes, in welchem sich Menschen aufhalten. Bei einer Halle oder dgl. mit hoher Deckenhöhe ist die Anforderungszone somit der untere Bereich bis zu einer Höhe von etwa 2 m bis 3 m der Halle. Die Abstrahlfläche der Deckenstrahlplatten ist so orientiert ist, dass die Strahlung auf die zu temperierende Anforderungszone hingerichtet ist.

Ein großer Energieverlust entsteht durch Konvektionsverluste von erwärmter Luft aber auch durch Strahlung, die nicht relevante Bereiche bestrahlt. Bezüglich der Konvektionsverluste wird in der DE 100 24 507 B4 eine spezielle Form mit einer konkav geformten Abstrahlfläche vorgeschlagen, um einen höheren Wirkungsgrad zu erzielen. Dies liegt daran, dass durch die Form der Abstrahlfläche die nach oben, also weg von der Anforderungszone, strömende Luft reduziert wird. Ebenso ist es bekannt, horizontal montierte Deckenstrahlplatten durch seitliche Schürzen zu begrenzen und so den Verlust an Konvektionswärme zu reduzieren. Solche Systeme führen zu einer gleichmäßigeren Temperierung in der Anforderungszone.

Die DE 203 12 885 offenbart eine Halle mit an der Decke befestigten und geneigten Verkleidungen. Oberhalb der Verkleidung verläuft eine Rinne, aus der eine Kühlflüssigkeit über Düsen auf die dem Raum abgewandte Seite der Verkleidung fließen kann, die dann in einer Sammeleinrichtung aufgefangen wird. Hierdurch soll die Wärmeisolierung (Abschirmung) der Dachhaut verbessert werden.

Ferner beschreibt die DE 94 12 349 eine Kühldecke, auf deren einer Seite eine Wärme- und Schalldämmung angeordnet ist.

Die DE 296 22 052 beschreibt ein Deckenkühlmodul zur Raumkühlung, das aus einem Konvektionskühlkörper und einem Deckensegel besteht. Zur Kühlung wird kalte Luft verwendet, die von Konvektionskühlkörpern auf das Deckensegel strömt, dort zuerst aufgefangen wird und anschließend über die Ränder des Deckensegels strömt und auf den Boden fällt. Um einen symmetrischen Luftabfall zu erzielen, sind die Konvektionskühlkörper paarweise und dachförmig (zum Zentrum des Deckensegels hin geneigt) oberhalb des Deckensegels angeordnet. Die Deckensegel selbst sind parallel zum Boden ausgerichtet.

Aufgabe der vorliegenden Erfindung ist es, ein System der eingangs genannten Art sowie ein Gebäude hiermit zu schaffen, die sich durch einen minimierten Wärmeverlust auszeichnen.

Diese Aufgabe wird im Wesentlichen dadurch gelöst, dass die Abstrahlfläche zumindest einer ersten der Deckenstrahlplatten in Richtung einer zweiten Deckenstrahlplatte geneigt ist. So wird erreicht, dass Deckenstrahlplatten am Rand der Anforderungszone Bereiche außerhalb der Anforderungszone mit gar keiner oder nur mit wenig Strahlungsenergie beaufschlagen. Die Temperierung eines Bereichs mit einem derartigen System aus Deckenstrahlplatten führt daher zu einem deutlich geringeren Verlust an Strahlungsenergie, da das Temperieren von Bereichen die für die Anforderungszone nicht relevant sind vermieden wird. Die Erfindung basiert dabei auf der Idee, die Deckenstrahlplatten in einem System so zu positionieren, dass die Anforderungszone gleichmäßig erwärmt wird und gleichzeitig die Strahlung so auszurichten das insbesondere in den Randbereichen im Wesentlichen nur die Anforderungszone mit Wärmestrahlung beaufschlagt wird. Durch die Neigung einer der Deckenstrahlplatten lässt sich die Wärmestrahlung bspw. von Außenwänden, über die ein großer Teil der Wärme verloren gehen kann, weg in Richtung zu der Anforderungszone gelenkt wird.

Nach einer bevorzugten Ausführungsform sind die Deckenstrahlplatten so orientiert, dass der Kreuzungspunkt der jeweiligen negativen Flächennormale im Mittelpunkt der Abstrahlflächen unterhalb der Abstrahlfläche liegt. Der Kreuzungspunkt muss dabei nicht innerhalb der Anforderungszone oder des Raumes liegen. Die negative Flächennormale im Mittelpunkt der Abstrahlfläche einer Deckenstrahlplatte beschreibt einen Vektor, der von der Abstrahlfläche weg und auf die Anforderungszone hinweist. Insbesondere bei einer konkav geformten Abstrahlfläche wird durch die Anforderung des Kreuzens der oben beschriebenen Flächennormalen sichergestellt, dass die Strahlung der Deckenstrahlelemente auf einen gemeinsamen Bereich hin gerichtet ist.

Erfindungsgemäß wird es bevorzugt, wenn zumindest die geneigte Deckenstrahlplatte eine seitliche Konvektionsleitschürze aufweist, die gegenüber der Abstrahlfläche abgewinkelt ist. Diese Konvektionsleitschürze hindert aufgewärmte Luftschichten in der Nähe der Abstrahlfläche daran, von der Anforderungszone weg, nach oben, zu strömen. So können insbesondere Konvektionsverluste, die durch die Neigung der Deckenstrahlplatten bedingt sind, verhindert werden.

Um die Wärmeverluste auf der Seite des Rohrregisters zu minimieren, ist auf der Seite der Deckenstrahlplatten bzw. des Rohrregisters, die der Anforderungszone abgewandt ist, eine Wärmedämmung vorgesehen.

Die Erfindung betrifft ferner ein Gebäude mit wenigstens einem zu temperierenden Raum mit mehreren Seitenwänden, einer Raumdecke sowie einem Boden. In diesem zu temperierenden Raum sind wenigstens zwei Deckenstrahlplatten an der Raumdecke montiert. Die in Richtung der zweiten Deckenstrahlplatte geneigte Abstrahlfläche der ersten Deckenstrahlplatte ist dabei näher an einer der Seitenwände angeordnet als die zweite Deckenstrahlplatte. Die wandnahe Deckenstrahlplatte weist daher im Wesentlichen in Richtung Raummitte, also weg von den Seitenwänden.

In Weiterbildung dieses Erfindungsgedankens ist es vorgesehen, dass die Neigung der Abstrahlfläche der ersten Deckenstrahlplatte in Abhängigkeit von der Montagehöhe und/oder in Abhängigkeit von der Entfernung der ersten Deckenstrahlplatte zu einer benachbarten Seitenwand derart gewählt wird, dass die Wärmestrahlung nur einen Teil der Seitenwand mit Strahlung beaufschlägt. Die Neigung wird insbesondere so gewählt, dass nur die untere Hälfte der Seitenwand, d.h. den Bereich der Seitenwand, in dem die Anforderungszone liegt, mit Wärmestrahlung beaufschlagt wird. Dies kann möglicherweise auf den Bereich beschränkt sein, in dem sich Personen aufhalten, beispielsweise etwa 2 m bis etwa 3 m über dem Boden.

Nach einer weiteren Ausführungsform ist die Seitenwand, welche zu der geneigten Deckenstrahlplatte benachbart ist, eine Außenwand des Gebäudes oder ein anders temperierter Raum. Dies führt dazu, dass der Temperaturgradient zwischen dem zu temperierenden Raum und dem Außenraum oder dem anders zu temperierenden Raum möglichst so gehalten wird, dass ein geringer Wärmeverlust entsteht.

Im Folgenden wird eine Ausführungsform der Erfindung beispielhaft und unter Bezugnahme auf die beigefügte Zeichnung näher erläutert.

Es zeigen:
- Figur 1: eine schematische Seitenansicht eines erfindungsgemäßen Systems aus Deckenstrahlplatten und
- Figur 2: eine Schnittdarstellung der Deckenstrahlplatte entlang der Linie S1-S1 in Figur 1.

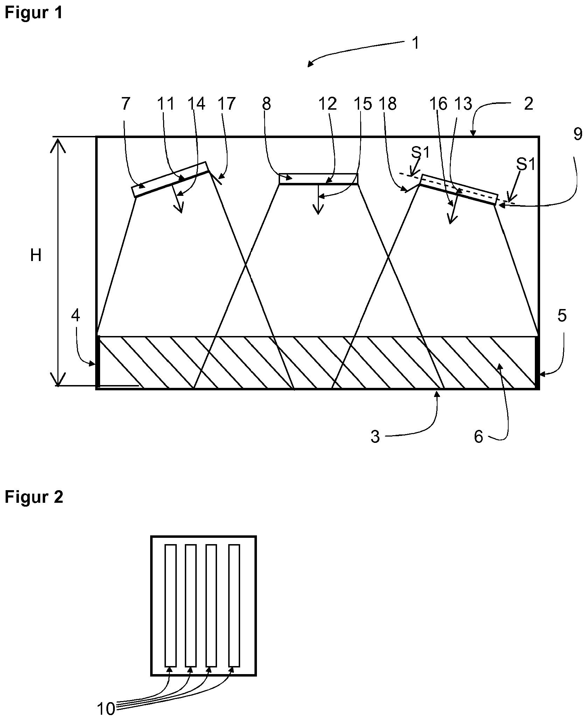

Figur 1 zeigt eine schematische Seitenansicht eines erfindungsgemäßen Systems aus Deckenstrahlplatten in einem Raum 1 mit einer Decke 2, einem Boden 3 sowie mehreren Seitenwänden 4 bzw. 5. In diesem Raum soll ein bodennaher Bereich 6 durch das System temperiert werden. Dieser Bereich 6 bildet somit die Anforderungszone des Systems, die sich nicht über die gesamte Höhe H des Raumes 1 erstreckt.

In dem dargestellten Ausführungsbeispiel weist das erfindungsgemäße System drei einzelne Deckenstrahlplatten 7, 8 und 9 auf. Die Deckenstrahlplatten bestehen ähnlich dem in der DE 100 24 507 B4 beschriebenen Aufbau aus einem Rohrregister 10 mit mehreren von einem Wärmeübertragungsmedium durchströmten Rohren sowie aus Abstrahlplatten oder -flächen, die mit dem Rohrregister in wärmeleitendem Kontakt stehen. Die bspw. durch Bleche gebildeten Abstahlflächen 11, 12, 13 der Deckenstrahlplatten weisen in der in Figur 1 gezeigten Einbaulage in Richtung der zu temperierenden Anforderungszone 6.

Die Abstrahlfläche 12 der mittleren Deckenstrahlplatte 8 ist horizontal ausgerichtet, wobei die negative Flächennormale 15 im Mittelpunkt auf die Raummitte weist. Die beiden äußeren Deckenstrahlplatten 7 und 9 sind gegenüber der mittleren Deckenstrahlplatte 8 geneigt. Die Neigung ist so gewählt, dass sich die negativen Flächennormalen 14 bzw. 16 im Mittelpunkt der äußeren Deckenstrahlplatten mit der negativen Flächennormalen 15 im Mittelpunkt der mittleren Deckenstrahlplatte 8 unterhalb der Abstrahlfläche 12 kreuzen. Erfindungsgemäß können auch mehrere der Deckenstrahlplatten im Wesentlichen horizontal ausgerichtet sein, wenn zumindest eine, vorzugsweise in der Nähe einer Außenwand 4, 5 angeordnete Platte gegenüber der oder den anderen Platte(n) so geneigt angeordnet ist, dass die Wärmestrahlung nicht auf die außerhalb der Anforderungszone 6 gelegenen Bereiche der Wände 4, 5 gerichtet ist.

Um insbesondere bei der oder den geneigt angeordneten Platten 7, 8 die Konvektionsverluste zu minimieren, weisen diese eine seitliche Konvektionsleitschürze 17 bzw. 18 auf. Die gegenüber der jeweiligen Abstrahlfläche 11 bzw. 13 angewinkelte Konvektionsleitschürze 17, 18 verhindert, dass aufgewärmte Luftschichten in der Nähe der Abstrahlfläche in Richtung Decke 2 strömen. Somit reduzieren die Konvektionsleitschürzen 17, 18 den Energieverlust.

Das Kippen der Deckenstrahlplatten 7 bzw. 9 führt dazu, dass die Seitenwände 4, 5 des Raumes 1 nur in dem Bereich der Anforderungszone 6, also die Seitenwandbereiche in Bodennähe, mit Wärme beaufschlagt werden. Damit ergibt sich ein gleichmäßigeres Temperaturprofil in der Anforderungszone 6 während gleichzeitig ein steilerer Temperaturgradient zu der Außenwand 4, 5 oder einem anders temperierten Nebenraum erreicht wird, wodurch der Wärmeverlust gering gehalten werden kann. Mit anderen Worten wird ein außerhalb der Anforderungszone 6 gelegener Bereich der Wände 4, 5 durch die Neigung der Deckenstrahlplatten 7 bzw. 9 im Wesentlichen nicht mit Wärmestrahlung beaufschlagt.

In Figur 2 ist eine Deckenstrahlplatte im Querschnitt entlang der Linie S1-S1 aus Figur 1 gezeigt. Zu sehen sind die von einem Wärmeübertragungsmedium durchströmten Rohre die zusammen das Rohrregister 10 bilden, welches erfindungsgemäß einen rechteckigen, ovalen, insbesondere runden Querschnitt aufweisen kann.

### Bezugszeichen

- 1: Raum
- 2: Decke
- 3: Boden
- 4,5: Seitenwände
- 6: Anforderungszone
- 7, 8, 9: Deckenstrahlplatte
- 10: Rohrregister
- 11, 12, 13: Abstrahlfläche
- 14, 15, 16: negative Flächennormale im Mittelpunkt der Abstrahlflächen
- 17, 18: Konvektionsleitschürze

- H: Raumhöhe

## Patentansprüche

1. Gebäude mit wenigstens einem zu temperierenden Raum (1) mit mehreren Seitenwänden (4, 5), einer Raumdecke (2) sowie einem Boden (3), wobei in dem zu temperierenden Raum (1) ein System aus wenigstens zwei voneinander beabstandet angeordneten Deckenstrahlplatten (7, 8, 9) zum Temperieren einer Anforderungszone (6) innerhalb des zu temperierenden Raumes (1) vorgesehen ist, wobei jede Deckenstrahlplatte (7, 8, 9) ein von einem Wärmeübertragungsmedium durchströmtes Rohrregister (10) mit mehreren von dem Wärmeübertragungsmedium durchströmten Rohren aufweist, **gekennzeichnet durch** weiter aufweisend wenigstens eine mit dem Rohrregister (10) in wärmeleitendem Kontakt stehende Abstrahlfläche (11, 12, 13), die in einer Einbaulage in Richtung des zu temperierenden Raumes (1) weist, wobei zumindest eine erste der Deckenstrahlplatten (7, 9) einschließlich ihrer Abstrahlfläche (11, 13) in Richtung einer zweiten Deckenstrahlplatte (8) derart geneigt ist, dass die Wärmestrahlung von den Seitenwänden (4, 5) weg in Richtung zu der Anforderungszone (6) gelenkt wird, wobei von mehreren Deckenstrahlplatten jeweils die zu einer Seitenwand (4, 5) des zu temperierenden Raumes (1) benachbarte Deckenstrahlplatte (7, 9) eine zur Mitte des zu temperierenden Raumes hin geneigt angeordnete Abstrahlfläche (11, 13) aufweist und dass wenigstens die Abstrahlfläche (11, 13) der ersten Deckenstrahlplatte (7, 9) an zumindest einer ihrer Seitenkanten durch eine gegenüber der Abstrahlfläche (7, 9) abgewinkelt angeordnetes Konvektionsleitschürze (17, 18) begrenzt wird, und wobei die in Richtung der zweiten Deckenstrahlplatte (8) geneigte Abstrahlfläche (11, 13) der ersten Deckenstrahlplatte (7, 9) näher an einer der Seitenwände (4, 5) angeordnet ist als die zweiten Deckenstrahlplatte (8).

2. Gebäude nach Anspruch 1, **dadurch gekennzeichnet, dass** die Neigung der Abstrahlfläche (11, 13) der ersten Deckenstrahlplatte (7, 9) in Abhängigkeit der Montagehöhe der ersten Deckenstrahlplatte (7, 9) innerhalb des zu temperierenden Raumes (1) und/oder in Abhängigkeit der Entfernung der ersten Deckenstrahlplatte (7, 9) zu einer benachbarten Seitenwand (4, 5) derart gewählt ist, dass die Wärmestrahlung der Abstrahlfläche (11, 13) der ersten Deckenstrahlplatte (7, 9) nicht auf die obere Hälfte, der zu der ersten Deckenstrahlplatte (7, 9) benachbarten Seitenwand (4, 5) gerichtet ist.

3. Gebäude nach einem der Ansprüche 1 bis 3, **dadurch gekennzeichnet, dass** die Seitenwand (4, 5), welche zu der ersten Deckenstrahlplatte (7, 9) benachbart ist, eine Außenwand des Gebäudes oder eine an einen nicht oder anders temperierten Raum des Gebäudes angrenzende Innenwand ist.

4. Gebäude nach einem der vorhergehenden Ansprüche, **dadurch gekennzeichnet, dass** die negative Flächennormale (14, 16) im Mittelpunkt der Abstrahlfläche (11, 13) der ersten Deckenstrahlplatte (7, 9) die negative Flächennormale (15) im Mittelpunkt der Abstrahlfläche (12) der zweiten Deckenstrahlplatte (8) kreuzt.

5. Gebäude nach einem der vorhergehenden Ansprüche, **dadurch gekennzeichnet, dass** auf der Seite der Deckenstrahlplatten (7, 8, 9) oder des Rohrregisters (10), die dem Raum (1) abgewandt ist, eine Wärmedämmung vorgesehen ist.

## Claims

1. A building having at least one room (1) to be temperature-controlled, said room having multiple side walls (4, 5), a room ceiling (2) and a floor (3), there being provided in the room (1) to be temperature-controlled a system of at least two mutually spaced radiant ceiling panels (7, 8, 9) for controlling the temperature of a demand zone (6) within the room (1) to be temperature-controlled, each radiant ceiling panel (7, 8, 9) having a pipework assembly (10) through which a heat transfer medium flows and which has multiple pipes through which the heat transfer medium flows,
**characterised by** further having at least one radiant surface (11, 12, 13) which is in thermally conductive contact with the pipework assembly (10) and faces towards the room (1) to be temperature-controlled when in an installed position,
wherein at least a first of the radiant ceiling panels (7, 9) including the radiant surface (11, 13) thereof is inclined towards a second radiant ceiling panel (8) such that the thermal radiation is directed away from the side walls (4, 5) towards the demand zone (6), wherein, of multiple radiant ceiling panels, in each case the radiant ceiling panel (7, 9) adjacent to a side wall (4, 5) of the room (1) to be temperature-controlled has a radiant surface (11, 13) inclined towards the centre of the room (1) to be temperature-controlled, and at least the radiant surface (11, 13) of the first radiant ceiling panel (7, 9) is delimited at at least one of its side edges by a convection guide skirt (17, 18) which is arranged angled to the radiant surface (7, 9), and wherein the radiant surface (11, 13), inclined towards the second radiant ceiling panel (8), of the first radiant ceiling panel (7, 9) is arranged closer to one of the side walls (4, 5) than the second radiant ceiling panel (8).

2. The building according to Claim 1, **characterised in that** the inclination of the radiant surface (11, 13) of the first radiant ceiling panel (7, 9) is selected depending on the installation height of the first radiant ceiling panel (7, 9) within the room (1) to be temperature-controlled and/or depending on the distance of the first radiant ceiling panel (7, 9) from an adjacent side wall (4, 5) such that the thermal radiation of the radiant surface (11, 13) of the first radiant ceiling panel (7, 9) is not directed onto the upper half of the side wall (4, 5) adjacent to the first radiant ceiling panel (7, 9).

3. The building according to any one of Claims 1 to 3, **characterised in that** the side wall (4, 5) which is adjacent to the first radiant ceiling panel (7, 9) is an outer wall of the building or an inner wall adjacent to a room of the building which is not temperature-controlled or is temperature-controlled differently.

4. The building according to any one of the preceding claims, **characterised in that** the negative surface normal (14, 16) in the centre point of the radiant surface (11, 13) of the first radiant ceiling panel (7, 9) intersects the negative surface normal (15) in the centre point of the radiant surface (12) of the second radiant ceiling panel (8).

5. The building according to any one of the preceding claims, **characterised in that** thermal insulation is provided on the side of the radiant ceiling panels (7, 8, 9) or of the pipework assembly (10) facing away from the room (1).

## Revendications

1. Bâtiment comportant au moins une pièce à tempérer (1) avec plusieurs murs latéraux (4, 5), un plafond (2) et un sol (3), dans lequel dans la pièce à tempérer (1) il est prévu un système constitué d'au moins deux panneaux rayonnants de plafond (7, 8, 9) disposés à distance l'un de l'autre pour réguler la température d'une zone d'exigence (6) dans la pièce à tempérer (1), dans lequel chaque panneau rayonnant de plafond (7, 8, 9) présente un registre tubulaire (10) traversé par un fluide caloporteur, avec plusieurs tuyaux traversés par le fluide caloporteur,
**caractérisé en ce que** celui-ci présente en outre au moins une surface de rayonnement (11, 12, 13) en contact thermoconducteur avec le registre tubulaire (10), laquelle est dirigée vers la pièce à tempérer (1) dans la position de montage, dans lequel
au moins un premier des panneaux rayonnants de plafond (7, 9) y compris sa surface de rayonnement (11, 13) est incliné de telle façon vers un deuxième panneau rayonnant de plafond (8), que le rayonnement thermique est guidé à partir des murs latéraux (4, 5) vers la zone d'exigence (6), dans lequel, parmi plusieurs panneaux rayonnants de plafond, le panneau rayonnant de plafond (7, 9) respectivement adjacent à un mur latéral (4, 5) de la pièce à tempérer (1) présente une surface de rayonnement (11, 13) disposée de façon à être inclinée vers le centre de la pièce à tempérer (1), et **en ce qu'**au moins la surface de rayonnement (11, 13) du premier panneau rayonnant de plafond (7, 9) est délimitée, au moins au niveau de l'un de ses bords latéraux, par une jupe conductrice de convection (17, 18) disposée de manière à former un angle par rapport à la surface de rayonnement (7, 9), et dans lequel la surface de rayonnement (11, 13) du premier panneau rayonnant de plafond (7, 9) inclinée vers le deuxième panneau rayonnant de plafond (8) est disposée plus près de l'un des murs latéraux (4, 5) que le deuxième panneau rayonnant de plafond (8).

2. Bâtiment selon la revendication 1, **caractérisé en ce que** l'inclinaison de la surface de rayonnement (11, 13) du premier panneau rayonnant de plafond (7, 9) est sélectionnée de telle façon en fonction de la hauteur de montage du premier panneau rayonnant de plafond (7, 9) dans la pièce à tempérer (1) et/ou en fonction de la distance entre le premier panneau rayonnant de plafond (7, 9) et un mur latéral (4, 5) adjacent, que le rayonnement thermique de la surface de rayonnement (11, 13) du premier panneau rayonnant de plafond (7, 9) n'est pas dirigé vers la moitié supérieure du mur latéral (4, 5) adjacent au premier panneau rayonnant de plafond (7, 9).

3. Bâtiment selon l'une des revendications 1 à 3, **caractérisé en ce que** le mur latéral (4, 5) adjacent au premier panneau rayonnant de plafond (7, 9) est un mur extérieur du bâtiment ou un mur intérieur adjacent une pièce du bâtiment non tempérée ou tempérée autrement.

4. Bâtiment selon l'une des revendications précédentes, **caractérisé en ce que** la normale de surface négative (14, 16) au point central de la surface de rayonnement (11, 13) du premier panneau rayonnant de plafond (7, 9) croise la normale de surface négative (15) au point central de la surface de rayonnement (12) du deuxième panneau rayonnant de plafond (8).

5. Bâtiment selon l'une des revendications précédentes, **caractérisé en ce qu'**un isolant thermique est prévu sur le côté des panneaux rayonnants de plafond (7, 8, 9) ou du registre tubulaire (10) opposé à la pièce (1).
